# EUROPEAN PATENT SPECIFICATION

(11) **EP 2 793 290 B1**
(45) Date of publication and mention of the grant of the patent: **18.10.2017**
(21) Application number: 14161155.8
(22) Date of filing: 21.03.2014
(51) Int. Cl.: H01M 2/10

(54) **BATTERY MODULE**
BATTERIEMODUL
MODULE DE BATTERIE

(30) Priority: 17.04.2013 US 201361813134 P; 05.03.2014 US 201414198208
(43) Date of publication of application: 22.10.2014
(73) Proprietor: Samsung SDI Co., Ltd., Yongin-si, Gyeonggi-do (KR)
(72) Inventor: Park, Shi-Dong, Gyeonggi-do (KR); Cho, Jun-Woo, Gyeonggi-do (KR); Kim, Young-Deok, Gyeonggi-do (KR)
(74) Representative: Mounteney, Simon James

(56) References cited:
- EP-A2- 1 126 533
- EP-A2- 2 413 395
- US-A1- 2003 232 239
- US-A1- 2006 093 899
- US-A1- 2010 196 749
- DATABASE WPI Week 199513 Thomson Scientific, London, GB; AN 1995-095075 XP002723712, JAPAN METALS & CHEM CO LTD: -& JP H07 22003 A 24 January 1995 (1995-01-24)

## Description

### 1. Field

An aspect of the present invention relates to a battery module.

### 2. Description of the Related Art

A high-power battery module using a non-aqueous electrolyte with high energy density has recently been developed. The high-power battery module is configured as a large-capacity battery module manufactured by connecting a plurality of battery cells in series so as to be used for driving devices, e.g., motors of electric vehicles and the like, which require high power.

As the number of devices employing the battery module increases, studies have been conducted to improve the productivity of the battery module. As the external appearance of the devices is diversified, it is required to vary the shape of the battery module. However, the safety of the battery module should be basically secured. Therefore, studies on the structure of a battery module capable of satisfying all the requirements have been conducted in various fields. Document US 2003/232239 A1 is an example of a document describing a battery module according to the preamble of independent claim 1. The documents US 2010/196749 A1, EP 2 413 395 A2 and JP H07 22003 A describe related battery modules.

### SUMMARY

Embodiments provide a battery module capable of improving safety without deformation of a housing portion, caused by an external impact, and implementing lightweight.

The present invention provides a battery module as defined in any of claims 1 to 11.

According to the present invention, there is provided a battery module, including: a plurality of battery cells arranged in one direction; and a housing portion disposed on outer surfaces of the plurality of battery cells, wherein the housing portion includes a reinforcing plate positioned between at least any two battery cells, preferably two adjacent cells. In the present invention the battery cells are arranged in a direction along the side plates.

The housing portion includes side plates respectively covering both side surfaces of the plurality of battery cells, and the reinforcing plate having both side surfaces respectively coupled to the side plates.

The reinforcing plate is welded to the side plate.

A protruding portion is provided on the reinforcing plate, and a groove portion is provided in the side plate. The protruding portion is inserted into the groove portion so that the reinforcing plate and the side plate are coupled to each other.

The housing portion may preferably further include end plates respectively adjacent to the outermost battery cells so that both side surfaces of the end plate are connected to the respective side plates.

The thickness of each of the side plate and the reinforcing plate may preferably be identical to or thinner than that of the end plate.

The housing portion may preferably further include a bottom plate having both side surfaces connected to the respective side plates so as to cover the other surface opposite to one surface of the housing portion, from which electrode tabs of the plurality of battery cells are extracted.

The reinforcing plate may preferably be welded to the bottom plate.

A protruding portion may preferably be provided on any one of the reinforcing plate and the bottom plate, and a groove portion may preferably be provided in the other of the reinforcing plate and the bottom plate. The protruding portion may preferably be inserted into the groove portion so that the reinforcing plate and the side plate are coupled to each other.

The reinforcing plate and the bottom plate may preferably be coupled through screw-coupling.

The housing portion may preferably include iron.

The housing portion may preferably include stainless steel.

The reinforcing plate may preferably be coupled to a central portion of the side plate.

The height of the reinforcing member may preferably be equal to or less than a height of the battery cells.

An insulation coating layer may preferably be formed on at least one surface of the reinforcing plate.

Other features and advantages of the present invention will become more fully apparent from the following detailed description, taken in conjunction with the accompanying drawings.

Terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

According to the battery module of the present invention, the reinforcing plate is included in the housing portion, so that the strength of the housing portion can be increased, thereby implementing the lightweight of the battery module while improving the safety of the battery module. US2010/196749, EP2413395, JPH07 22003 and US2003/232239 disclose battery cell containers.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to an embodiment of the present invention.
FIG. 2 is an exploded perspective view of the battery module shown in FIG. 1.
FIG. 3 is a sectional view taken along line A-A' of a housing portion in the battery module 100a shown in FIG. 2.
FIG. 4 is an exploded perspective view of a battery module according to another embodiment of the present invention.
FIG. 5 is a sectional view taken along line B-B' of a housing portion in the battery module shown in FIG. 4.
FIG. 6 is a plan view showing a portion of the housing portion in the battery module shown in FIG. 4.
FIG. 7 is an exploded perspective view of a battery module according to a reference embodiment of the present invention.
FIG. 8 is a plan view showing a portion of a housing portion in the battery module shown in FIG. 7.
FIG. 9 is a perspective view of a battery module according to a reference embodiment of the present invention.
FIG. 10 is an exploded perspective view of the battery module shown in FIG. 9.
FIG. 11 is a sectional view taken along line C-C' of a housing portion in the battery module shown in FIG. 9.

### DETAILED DESCRIPTION

In the following detailed description, only certain exemplary embodiments of the present invention have been shown and described, simply by way of illustration. Accordingly, the drawings and description are to be regarded as illustrative in nature and not restrictive. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

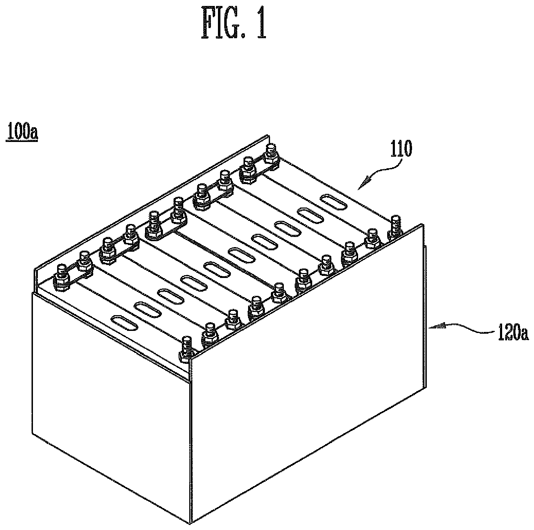

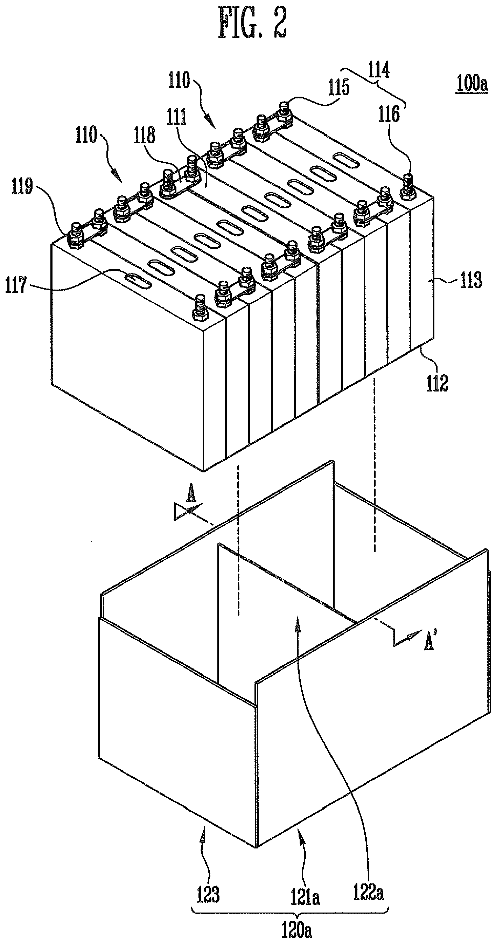

FIG. 1 is a perspective view of a battery module 100a according to an embodiment of the present invention. FIG. 2 is an exploded perspective view of the battery module 100a shown in FIG. 1. Hereinafter, the battery module 100a according to this embodiment will be described with reference to FIGS. 1 and 2.

In an embodiment of the present invention the height of the reinforcing member is equal to or less than a height of the battery cells, optionally the height of the reinforcing member is between 100% and 50% of the height of the battery cells, optionally between 95% and 60%, optionally between 85% and 75%, for example.

In an embodiment of the present invention, there may be two or more reinforcing plates, optionally between 2 and 10, optionally between 3 and 8 and optionally between 4 and 6, for example. In an embodiment of the present invention the reinforcing plates may be placed equally apart along the length of the battery module, alternatively the plates may be placed such that there is one plated in the centre of the battery module and the other plates distributed as appropriate.

As shown in FIGS. 1 and 2, the battery module 100a according to this embodiment includes a plurality of battery cells 110 arranged in one direction, and a housing portion 120a disposed on outer surfaces of the plurality of battery cells 110. The housing portion 120a includes a reinforcing plate 122a positioned between at least two battery cells 110.

In an embodiment of the present invention the battery cells are arranged in a direction along the side plates where each side plate contacts the opposing first surfaces of the battery cells. To illustrate this point, the line extending from the reference numerals 113 in Figures 2, 4, 7 and 10 contacts a first surface of a battery cell. In an embodiment of the present invention the battery cells comprise opposing second surfaces that are generally perpendicular to the first surfaces and the battery cells are arranged second surface to second surface of adjacent cells. In an embodiment of the present invention, the term "generally perpendicular" means adjacent to and essentially at a right angle to, preferably perpendicular. In an embodiment of the present invention the battery cells are arranged one behind another in one direction, .e.g. in single file. In an embodiment of the present invention the reinforcing plate is positioned between the second surfaces of two adjacent battery cells.

The battery cell 110 is a member that generates energy, and may preferably be provided in plural numbers to be aligned in one direction.

Here, each battery cell 110 may preferably include a battery case having one opened surface, and an electrode assembly and an electrolyte, which are accommodated in the battery case. In this case, the electrode assembly and the electrolyte generate energy by an electrochemical reaction therebetween, and the battery case may preferably be sealed, for example, by one surface 111 of the battery cell 110 including a cap assembly. Terminal portions 114 having different polarities, i.e., positive and negative electrode terminals 115 and 116 may preferably be provided to protrude from the one surface 111 of the battery cell 110, and a vent portion 117 serving as a passage through gas generated inside the battery cell 110 is exhausted to the outside of the battery cell 110 may preferably be further provided as a safety means in the one surface 111 of the battery cell 110. The terminal portions 114 of adjacent battery cells 110 among the plurality of battery cells 110 may preferably be electrically connected to each other through a bus-bar 118, and the bus-bar 118 may preferably be fixed to the terminal portion 114, for example, by a fixing means 119 such as a nut. Meanwhile, the battery cell 110 may preferably include the one surface 111 from which the terminal portions 114 are extracted, the other surface 112 opposite to the one surface 111, and side surfaces 113 connecting the one and the other surfaces 111 and 112 to each other.

The housing portion 120a, as shown in FIGS. 1 and 2, is a member which is disposed on the outer surfaces of the plurality of battery cells 110 so as to align the plurality of battery cells 110 and to protect the plurality of battery cells 110 from the outside.

In an embodiment of the present invention the housing portion further comprises end plates respectively adjacent to the outermost battery cells so that both end plates are respectively coupled to both side plates. In an embodiment of the present invention the end plates cover the outermost second surfaces of the outermost battery cells.

Here, the housing portion 120a may preferably include, for example, two side plates 121a, two end plates 123 and a reinforcing plate 122a. In this case, the side plates 121a are implemented to respectively cover both side surfaces 113 of the whole of the plurality of battery cells 110, and the end plates 123 may preferably be implemented to be respectively adjacent to the outermost battery cells 110, i.e., to respectively cover wide surfaces of both the outermost battery cells 110. Thus, the housing portion 120a can form a box shape having opened upper and lower surfaces, and can have a shape in which the battery cells 110 are accommodated. In this case, the side plate 121a and the end plate 123 may preferably be connected to each other through screw-coupling, welding or mechanical groove-projection coupling. Both outer surfaces of the reinforcing plate 122a may preferably be respectively coupled to the two side plates 121a, for example, through welding. The reinforcing plate 122a may preferably be positioned between at least any two battery cells 110 among the plurality of battery cells 110. In this case, the reinforcing plate 122a may preferably be positioned between two battery cells 110 at a central portion of the plurality of battery cells 110, or may preferably be positioned between other two battery cells 110. Alternatively, the reinforcing plate 122a may preferably be provided in plural numbers to be positioned between the plurality of battery cells 110.

Meanwhile, in a case where the housing portion 120a includes a metal, optionally iron, e.g., stainless steel, the weight of the battery module 100a may preferably be decreased. However, if the length of the battery module 100a is lengthened, the deformation of the battery module 100a may preferably be caused by an impact. Accordingly, in the battery module 100a according to this embodiment, the reinforcing plate 122a is coupled to a central portion of the side plate 121a, so that the strength of the housing portion 120a can be increased, thereby solving such a problem. In this case, the reinforcing plate 122a may preferably be coupled to the side plate 121a, for example, through welding such as laser welding, but high-temperature heat is generated in the welding. Hence, preferably, the battery cells 110 are positioned after the reinforcing plate 122a is coupled to the side plates 121a, and the end plates 123 are connected to the side plates 121a. In a case where the reinforcing plate 122a is coupled to the side plate 121a through welding, it is difficult to perform the welding when the thickness of each of the reinforcing plate 122a and the side plate 121a is thick. Therefore, the thickness of each of the reinforcing plate 122a and the side plate 121a may preferably be preferably identical to or thinner than that of the end plate 123. For example, the reinforcing plate 122a and the side plate 121a may preferably be implemented to have a thickness of 0.8 to 1mm, and the end plate 123 may preferably be implemented to have a thickness of 1.5mm or more.

Meanwhile, an insulation coating layer may preferably be formed by coating an insulating material on at least one surface of the reinforcing plate 122a, more specifically, surfaces of the reinforcing plate 122a contacting the battery cells 110 so that the reinforcing plate 122a and the battery cell 110 is not unintentionally shortcircuited with each other.

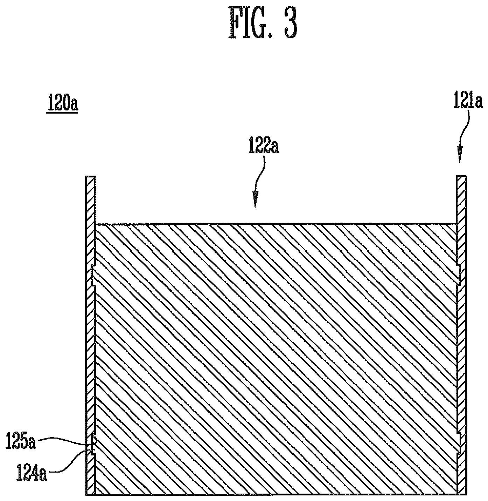

FIG. 3 is a sectional view taken along line A-A' of the housing portion 120a in the battery module 110 shown in FIG. 2. Hereinafter, the housing portion 120a according to this embodiment will be described in detail with reference to FIG. 3.

In a case where the side plate 121a and the reinforcing plate 122a are simply connected to each other through welding, the coupling between the side plate 121a and the reinforcing plate 122a is relatively weak, and therefore, the side plate 121a and the reinforcing plate 122a may preferably be separated from each other by an external force. However, in the battery module 100a according to the invention, the coupling between a protruding portion 124a and a groove portion 125a is added as shown in FIG. 3, so that the coupling between the side plate 121a and the reinforcing plate 122a can be firmly implemented.

Specifically, the protruding portion 124a is formed on the reinforcing plate 122a, and the groove portion 125a is formed in the side plate 121a. The protruding portion 124a of the reinforcing plate 122a is inserted into the groove portion 125a of the side plate 121a, and the portion at which the protruding portion 124a of the reinforcing plate 122a is inserted into the groove portion 125a of the side plate 121a is then welded, so that the reinforcing plate 122a and the side plate 121a can be firmly coupled to each other. In this case, the protruding portion 124a is first inserted into the groove portion 125a, and the welding is then performed. Hence, the coupling between the reinforcing plate 122a and the side plate 121a can be firmly performed. Further, the protruding portion 124a and the groove portion 125a can be coupled to each other before the welding, so that it is possible to expect the effect that the position of the reinforcing plate 122a is aligned in the welding.

Meanwhile, the groove portion 125 may preferably be implemented to have the same number as the protruding portion 124a with the shape and position corresponding to those of the protruding portion 124a. In this case, the term 'groove portion' is used in this embodiment, but the term 'groove portion' of the present invention may preferably be a concept including a hole completely passing through the side plate 121a. Although it has been described that the protruding portion 124a is formed on the reinforcing plate 122a and the groove portion 125a is formed in the side plate 121a, a case where the protruding portion 124a is formed on the side plate 121a and the groove portion 125a is formed in the reinforcing plate 122a is possible.

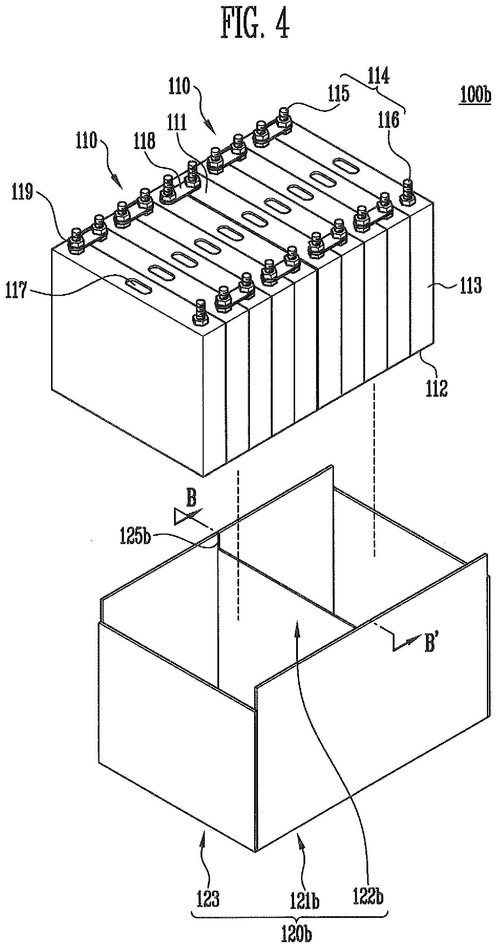

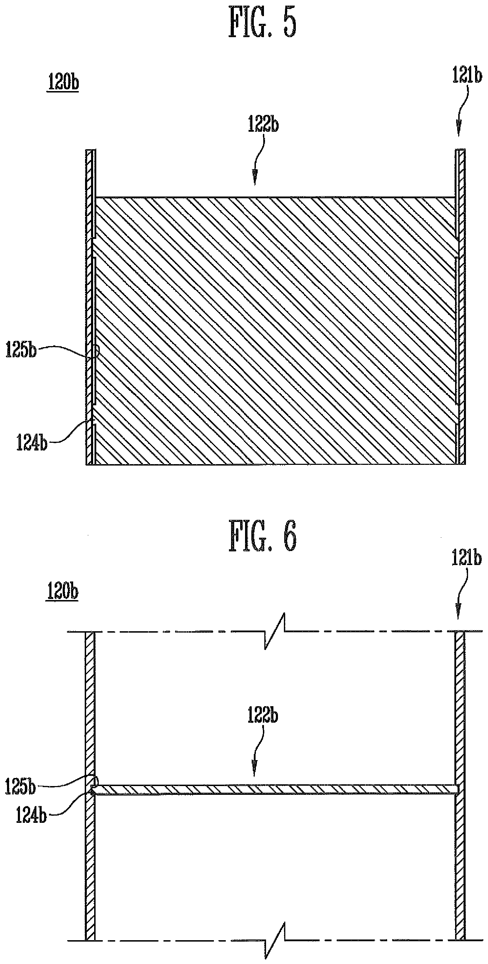

FIG. 4 is an exploded perspective view of a battery module 100b according to another embodiment of the present invention. FIG. 5 is a sectional view taken along line B-B' of a housing portion 120b in the battery module 100b shown in FIG. 4. FIG. 6 is a plan view showing a portion of the housing portion 120b in the battery module 100b shown in FIG. 4. Hereinafter, the battery module 100b according to this embodiment will be described with reference to FIGS. 4 to 6. Here, components identical or corresponding to those of the aforementioned embodiment are designated by like reference numerals, and their detailed descriptions will be omitted to avoid redundancy.

As shown in FIGS. 4 to 6, in the battery module according to this embodiment, the housing portion 120b includes a reinforcing plate 122b welded to side plates 121b. In this case, a groove portion 125b formed in the side plate 121b may preferably be formed long. Specifically, the groove portion 125b may preferably be formed vertically long in a slit shape, and a protruding portion 124b may preferably be inserted into the groove portion 125b. In this case, although two protruding portions 124b are provided at one side of the reinforcing plate 122b as shown in FIG. 5, only one groove portion 125b may preferably be provided to correspond to the two protruding portions 124b. In a case where the groove portion 125b is formed in a long slit shape, the two side plates 121b are erected to be spaced apart from each other, and the reinforcing plate 122b is inserted downwardly from upper portion of the side plates 121b between the side plates 121b, thereby providing convenience in the manufacturing of the housing portion 120b.

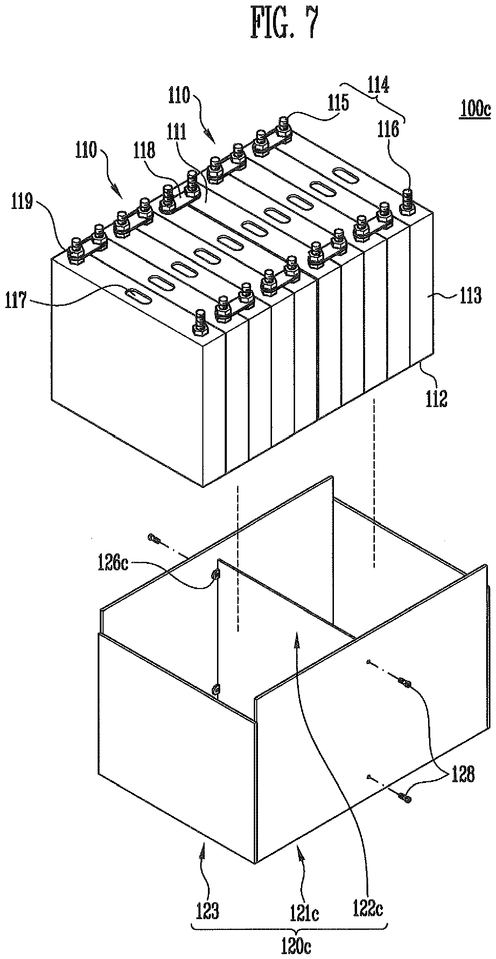

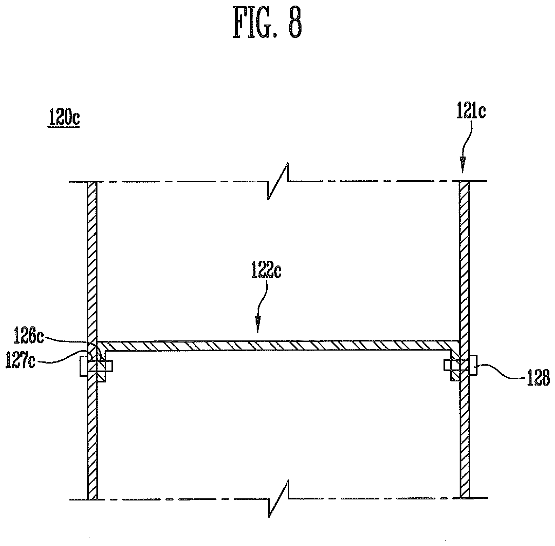

FIG. 7 is an exploded perspective view of a battery module 100c according to a reference embodiment of the present invention. FIG. 8 is a plan view showing a portion of a housing portion 120c in the battery module 100c shown in FIG. 7. Hereinafter, the battery module 100c according to this embodiment will be described with reference to FIGS. 7 and 8. Here, components identical or corresponding to those of the aforementioned embodiments are designated by like reference numerals, and their detailed descriptions will be omitted to avoid redundancy.

As shown in FIGS. 7 and 8, in the battery module 100c according to this embodiment, the housing portion 120c includes a reinforcing plate 122c coupled to side plates 121c. In this case, the reinforcing plate 122c and the side plate 121 may preferably be coupled to each other through screw-coupling. Specifically, a first coupling hole 126c is formed in the reinforcing plate 122c, and a second coupling hole 127c is formed in the side plate 121c. Then, a fixing member 128 is inserted into the first and second coupling holes 126c and 127c, so that the coupling between the reinforcing plate 122c and the side plate 121c can be implemented. In this case, a screw line may preferably be formed inside each of the first and second coupling holes 126c and 127c, and the fixing member 128 is implemented as a bolt, so that the reinforcing plate 122c and the side plate 121 can be firmly coupled to each other through screw-coupling.

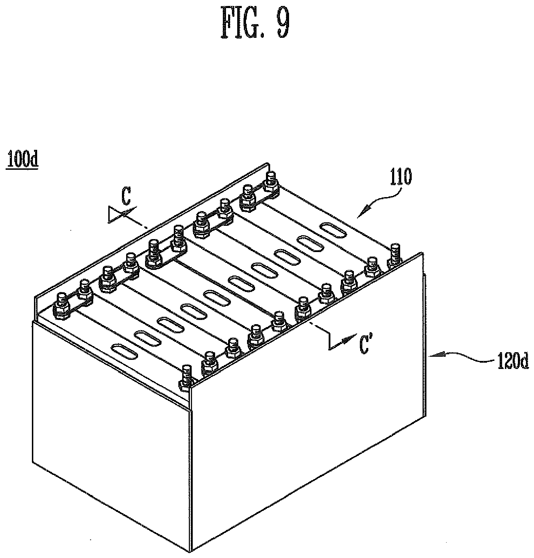

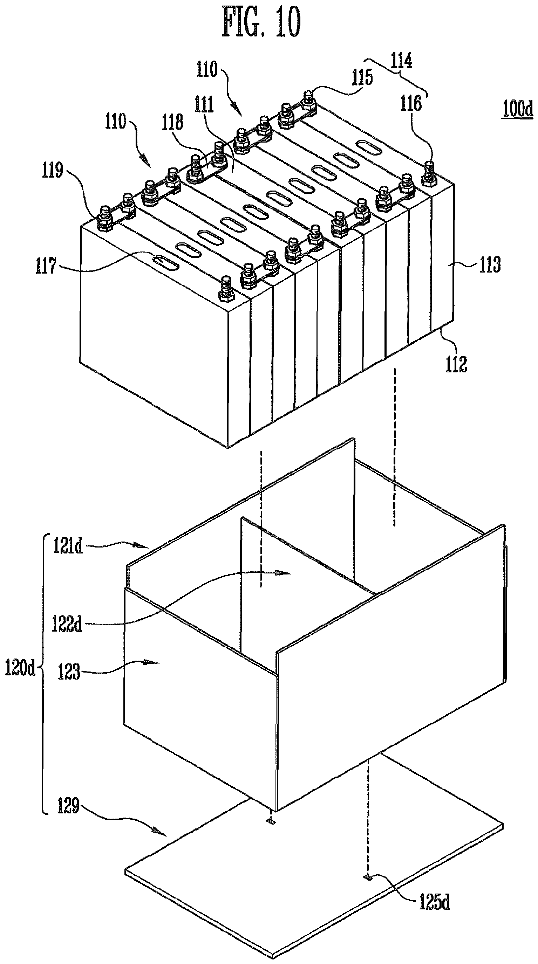

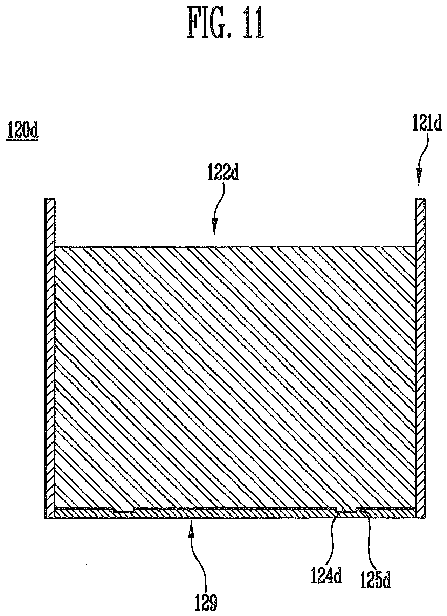

FIG. 9 is a perspective view of a battery module 100d according to a reference embodiment of the present invention. FIG. 10 is an exploded perspective view of the battery module 100d shown in FIG. 9. FIG. 11 is a sectional view taken along line C-C' of a housing portion 120d in the battery module 100d shown in FIG. 9. Hereinafter, the battery module 100d according to this embodiment will be described with reference to FIGS. 9 to 11. Here, components identical or corresponding to those of the aforementioned embodiments are designated by like reference numerals, and their detailed descriptions will be omitted to avoid redundancy. In an embodiment of the present invention the housing portion further comprises a bottom plate coupled to the side plates and/or the end plates when present so that the bottom plate covers a third surface of the battery cells opposite a fourth surface from which electrode tabs of the plurality of battery cells are extracted.

As shown in FIGS. 9 to 11, the battery module 100d according to this reference embodiment includes a plurality of battery cells 110 and the housing portion 120d. The battery module 100d may preferably further include a bottom plate 129 in addition to side plates 121d, a reinforcing plate 122d and end plates 123. Specifically, the bottom plate 129 may preferably be implemented to cover the other surface 112 of the whole of the plurality of battery cells 110. The bottom plate 129 may preferably be connected to the end plates 123 or the side plates 121d. In this embodiment, the reinforcing plate 122d may preferably be coupled to the bottom plate 129, and the reinforcing plate 122d and the bottom plate 129 may preferably be coupled to each other, for example, through simple welding, coupling between a protruding portion 124d and a groove portion 125d, and welding as shown in FIGS. 9 to 11, screw-coupling, etc.

Meanwhile, although it has been described in this reference embodiment that the reinforcing plate is coupled to the bottom plate, in the invention the reinforcing plate is coupled to both the side plate and preferably the bottom plate. In this case, the protruding portion may preferably be formed in three directions on the reinforcing plate, and the welding may preferably be performed in the state in which the protruding portion is inserted into the groove portion formed in each of the two side plates and the bottom plate. It will be apparent that the reinforcing plate and the bottom plate may preferably be coupled to each other through simple welding or screw-coupling.

While the present invention has been described in connection with certain embodiments, it is to be understood that the invention is not limited to the disclosed embodiments, but, on the contrary, is intended to cover various modifications included within the scope of the appended claims.

## Claims

1. A battery module (100a-100d) comprising a plurality ofbattery cells (110) with opposing first surfaces arranged in one direction; and a housing portion disposed on outer surfaces of the battery cells, wherein the housing portion comprises a reinforcing plate (122a-122d) positioned between two adjacent battery cells and side plates (121a-121d) respectively covering both first surfaces of the plurality of battery cells, and the reinforcing plate having both side surfaces respectively coupled to the side plates and the battery cells are arranged in a direction along the side plates, and **characterized in that** the reinforcing plate is coupled to both side plates by a protruding portion (124a, 124b, 124d) and groove portion (125a, 125b, 125d) arrangement, the groove portion being formed in a side plate and the protruding portion being formed on the reinforcing plate and the protruding portion (124a, 124b, 124d) is inserted into the groove portion (125a, 125b, 125d) and the portion at which the protruding portion (124a, 124b, 124d) is inserted into the groove portion (125a, 125b, 125d) is welded.

2. The battery module of claim 1, wherein the battery cells comprise a second surface which is perpendicular to the first surface, and the reinforcing plate (122a-122d) is positioned between the second surfaces of two adjacent battery cells (110).

3. The battery module of claim 1 or claim 2, wherein the housing portion further comprises end plates (123) respectively adjacent to the outermost battery cells so that both end plates (123) are respectively coupled to both side plates (121a).

4. The battery module of any of claims 1 to 3, wherein the housing portion further comprises a bottom plate (129) coupled to the side plates (121a-121d) and/or the end plates (123) when present so that the bottom plate (129) covers a third surface of the battery cells opposite a fourth surface from which electrode tabs of the plurality of battery cells are extracted.

5. The battery module according to claim 4, wherein the reinforcing plate (122a-122d) is coupled to the bottom plate (129) by welding, screw-coupling, or a protruding portion and groove portion arrangement, or a combination thereof.

6. The battery module of any of claims 2 to 5, wherein the thickness of each side plate (121a-121d) and the reinforcing plate (122a-122d) is equal to or thinner than the thickness of each end plate, optionally each side plate and the reinforcing plate has an independent thickness of equal to and between 0.8 to 1mm and the end plates have a thickness of equal and greater than 1.5mm.

7. The battery module of any of claims 1 to 6, wherein the components of the housing portion comprise metal optionally stainless steel.

8. The battery module of any of claims 1 to 7, wherein the reinforcing plate (122a-122d) is coupled to the centre of the side plates (121a-121d).

9. The battery module of any of claims 1 to 8, wherein the battery module comprises more than one reinforcing plate (122a-122d).

10. The battery module of any of claims 1 to 9, wherein a height of the reinforcing plate (122a-122d) is equal to or less than a height of the battery cells (110).

11. The battery module of any of claims 1 to 10, wherein an insulation coating layer is formed on at least one surface of the reinforcing plate.

## Patentansprüche

1. Batteriemodul (100a bis 100d) mit einer Mehrzahl von Batteriezellen (110) mit gegenüberliegenden ersten, in einer Richtung angeordneten Flächen; und einem Gehäuseabschnitt, das an äußeren Flächen der Batteriezellen angeordnet ist, wobei der Gehäuseabschnitt eine verstärkende Platte (122a bis 122d) umfasst, die zwischen zwei angrenzenden Batteriezellen bzw. Seitenplatten (121a bis 121d) angeordnet sind, die beide erste Flächen der Mehrzahl von Batteriezellen bedecken, und wobei die beiden Seitenflächen der verstärkenden Platte jeweils mit den Seitenplatten verbunden sind und die Batteriezellen in einer Richtung entlang den Seitenplatten angeordnet sind, und **dadurch gekennzeichnet, dass**
die verstärkende Platte an beiden Seitenplatten über einen vorstehenden Abschnitt (124a, 124b, 124d) und eine Anordnung eines Rillenabschnitts (125a, 125b, 125d) verbunden ist, der Rillenabschnitt in einer Seitenplatte ausgebildet ist und der vorstehende Abschnitt auf der verstärkenden Platte ausgebildet ist, und der vorstehende Abschnitt (124a, 124b, 124d) in den Rillenabschnitt (125a, 125b, 125d) eingesetzt ist und der Abschnitt, an dem der vorstehende Abschnitt (124a, 124b, 124d) in den Rillenabschnitt (125a, 125b, 125d) eingesetzt ist, verschweißt ist.

2. Batteriemodul nach Anspruch 1, wobei die Batteriezellen eine zweite Fläche umfassen, die senkrecht zu der ersten Fläche ist und die verstärkende Platte (122a bis 122d) zwischen den zweiten Flächen von zwei angrenzenden Batteriezellen (110) angeordnet ist.

3. Batteriemodul nach Anspruch 1 oder Anspruch 2, wobei der Gehäuseabschnitt ferner Endplatten (123) jeweils angrenzend an den äußersten Batteriezellen derart aufweist, dass beide Endplatten (123) jeweils mit beiden Seitenplatten (121a) verbunden sind.

4. Batteriemodul nach einem der Ansprüche 1 bis 3, wobei der Gehäuseabschnitt ferner, wenn vorhanden, eine Bodenplatte (129) aufweist, die an den Seitenplatten (121a bis 121d) und/oder den Endplatten (123), falls vorhanden, verbunden ist, so dass die Bodenplatte (129) eine dritte Fläche der Batteriezellen gegenüber einer vierten Fläche abdeckt, von der Elektrodenzungen der Mehrzahl von Batteriezellen abgezogen werden.

5. Batteriemodul nach Anspruch 4, wobei die verstärkende Platte (122a bis 122d) mit der Bodenplatte (129) durch Schweißen, Schraubverbindung oder eine Anordnung eines vorstehenden Abschnitts und eines Rillenabschnitts oder eine Kombination davon verbunden ist.

6. Batteriemodul nach einem der Ansprüche 2 bis 5, wobei die Dicke jeder Seitenplatte (121a bis 121d) und der verstärkende Platte (122a bis 122d) gleich der oder dünner ist als die Dicke jeder Endplatte, wobei wahlweise jede Seitenplatte und die verstärkende Platte eine unabhängige Dicke gleich und zwischen 0,8 bis 1 mm hat, und die Endplatten eine Dicke von gleich und grösser als 1,5 mm haben.

7. Batteriemodul nach einem der Ansprüche 1 bis 6, wobei die Komponenten des Gehäuseabschnitts Metall und wahlweise Edelstahl umfassen.

8. Batteriemodul nach einem der Ansprüche 1 bis 7, wobei die verstärkende Platte (122a bis 122d) mit der Mitte der Seitenplatten (121a bis 121d) verbunden ist.

9. Batteriemodul nach einem der Ansprüche 1 bis 8, wobei das Batteriemodul mehr als eine verstärkende Platte (122a bis 122d) umfasst.

10. Batteriemodul nach einem der Ansprüche 1 bis 9, wobei eine Höhe der verstärkenden Platte (122a bis 122d) gleich oder kleiner ist als eine Höhe der Batteriezellen (110).

11. Batteriemodul nach einem der Ansprüche 1 bis 10, wobei auf mindestens einer Fläche der verstärkenden Platte eine Isolationsüberzugsschicht erzeugt ist.

## Revendications

1. Module de batterie (100a-100d), comprenant plusieurs cellules de batterie (110) avec des premières surfaces opposées agencées dans une direction ; et une partie de boîtier disposée sur des surface externes des cellules de batterie, dans lequel la partie de boîtier comprend une plaque de renforcement (122a-122d) positionnée entre deux cellules de batterie adjacentes, et des plaques latérales (121a-121d) recouvrant respectivement les deux premières surfaces des plusieurs cellules de batterie, la plaque de renforcement comportant les deux surfaces latérales accouplées respectivement aux plaques latérales et les cellules de batterie agencés dans une direction le long des plaques latérales, et **caractérisé en ce que** :
la plaque de renforcement est accouplée aux deux plaques latérales par une partie en saillie (124a, 125b, 124d) et une partie de rainure (125a, 125b , 125d), la partie de rainure étant formée dans une plaque latérale et la partie en saillie étant formée sur la plaque de renforcement, la partie en saillie (124a, 124b, 124d) étant insérée dans la partie de rainure (125a, 125b, 125d), et la partie au niveau de laquelle la partie en saillie (124a, 124b, 124d) est insérée dans la partie de rainure (125a, 125b, 125d) étant soudée.

2. Module de batterie selon la revendication 1, dans lequel les cellules de batterie comprennent une deuxième surface perpendiculaire à la première surface, la plaque de renforcement (122a-122d) étant positionnée entre les deuxièmes surfaces de deux cellules de batterie adjacentes (110).

3. Module de batterie selon les revendications 1 ou 2, dans lequel la partie de boîtier comprend en outre des plaques d'extrémité (123) respectivement adjacentes aux cellules de batterie externes extrêmes, de sorte que les deux plaques d'extrémité (123) sont respectivement accouplées aux deux plaques latérales (121a).

4. Module de batterie selon l'une quelconque des revendications 1 à 3, dans lequel la partie de boîtier comprend en outre une plaque de base (129) accouplée aux plaques latérales (121a-121d), et/ou aux plaques d'extrémité (123), dans la mesure où elles sont présentes, de sorte que la plaque de base (129) recouvre une troisième surface des cellules de batterie opposée à une quatrième surface à partir de laquelle des languettes d'électrode des plusieurs cellules de batterie sont extraites.

5. Module de batterie selon la revendication 4, dans lequel la plaque de renforcement (122a-122d) est accouplée à la plaque de base (129) par soudage, accouplement par vis, ou par un agencement d'une partie en saillie et d'une partie de rainure, ou par une combinaison de ces moyens.

6. Module de batterie selon l'une quelconque des revendications 2 à 5, dans lequel l'épaisseur de chaque plaque latérale (121a-121d) et de la plaque de renforcement (122a-122d) est égale ou inférieure à l'épaisseur de chaque plaque d'extrémité, dans lequel chaque plaque latérale et la plaque de renforcement ont optionnellement une épaisseur indépendante, égale à ou comprise entre 0,8 et 1 mm, les plaques d'extrémité ayant une épaisseur égale ou supérieure à 1,5 mm.

7. Module de batterie selon l'une quelconque des revendications 1 à 6, dans lequel les composants de la partie de boîtier comprennent un métal, optionnellement de l'acier inoxydable.

8. Module de batterie selon l'une quelconque des revendications 1 à 7, dans lequel la plaque de renforcement (122a-122d) est accouplée au centre des plaques latérales (121a-121d).

9. Module de batterie selon l'une quelconque des revendications 1 à 8, dans lequel le module de batterie comprend plus d'une plaque de renforcement (122a-122d).

10. Module de batterie selon l'une quelconque des revendications 1 à 9, dans lequel une hauteur de la plaque de renforcement (122a-122d) est égale ou inférieure à une hauteur des cellules de batterie (110).

11. Module de batterie selon l'une quelconque des revendications 1 à 10, dans lequel une couche de revêtement isolante est formée sur au moins une surface de la plaque de renforcement.
